(19) **Europäisches Patentamt**

**European Patent Office**

**Office européen des brevets**

(11) **EP 0 629 879 B1**

(12) **EUROPÄISCHE PATENTSCHRIFT**

(45) Veröffentlichungstag und Bekanntmachung des Hinweises auf die Patenterteilung:
**01.03.2000 Patentblatt 2000/09**

(51) Int. Cl.⁷: **G01S 15/89**, G01S 7/52, G01C 13/00

(21) Anmeldenummer: **94104545.2**

(22) Anmeldetag: **23.03.1994**

(54) **Verfahren zum Bestimmen von Tiefenwerten eines Gewässers**

Method for determining the depth of a stretch of water

Procédé pour déterminer la profondeur d'un plan d'eau

(84) Benannte Vertragsstaaten:
**DE FR GB**

(30) Priorität: **14.06.1993 DE 4319607**

(43) Veröffentlichungstag der Anmeldung:
**21.12.1994 Patentblatt 1994/51**

(73) Patentinhaber:
**STN ATLAS Elektronik GmbH**
**28305 Bremen (DE)**

(72) Erfinder:
**Freking, Benno, Dipl.-Phys.**
**D-28833 Weyhe-Leeste (DE)**

(56) Entgegenhaltungen:
**US-A- 4 611 313        US-A- 5 077 699**

**Beschreibung**

Die Erfindung betrifft ein Verfahren zum Bestimmen von Tiefenwerten eines Gewässers mit einem Fächerlot der im Oberbegriff des Anspruchs 1 angegebenen Art.

Auf Forschungs- und Vermessungsschiffen werden Fächerlote eingesetzt, die der Kartierung und Exploration von Gewässern dienen. Dabei wird von einem Fächerlot, das unterhalb des Fahrzeugs angeordnet ist, ein bis zu 150° großer Winkelsektor erfaßt und gleichzeitig vermessen. In diesem Winkelsektor werden Ultraschallimpulse abgestrahlt und in den eng gebündelten Empfangsrichtungen mit einer fächerförmigen Richtcharakteristik in einer Vielzahl einzelner schmaler Sektoren wieder empfangen. Da die überwiegende Anzahl der Empfangsrichtungen nicht senkrecht sondern schräg nach unten ausgerichtet ist, werden Lotimpulse empfangen, die von einem Auftreffpunkt gestreut bzw. reflektiert worden sind, sich aber nicht linear sondern aufgrund von Schallbeugung auf einem gekrümmten Weg ausgebreitet haben. Die Ursache des gekrümmten Schallstrahlverlaufes liegt in der durch unterschiedliche Schallgeschwindigkeitsschichtungen hervorgerufenen Schallbeugung begründet. Von der unmittelbar am Wandler meßbaren Richtung des Schalleinfallswinkels kann daher nicht linear auf den Auftreffpunkt des Schallstrahls geschlossen werden, der aufgrund der Krümmung erheblich vom Auftreffpunkt des Schalleinfallswinkels abweicht. Aus US 5 077 699 ist ein Fächerecholot bekannt, bei dem die tatsächlichen Richtungen der Schallstrahlen durch Interpolation aus dem mittels Fast Fourier Transform (FTT) berechneten Spektrum der Empfangssignale mehrerer Schallempfänger bestimmt werden. Durch zusätzliche Ermittlung der Schallgeschwindigkeit in den verschiedenen Schichtungen eines Gewässers, beispielsweise mit einer vom Fahrzeug herabgelassenen Schallmeßsonde, können die Schallgeschwindigkeiten in den verschiedenen Schichtungen gemessen und eine solche mittlere Schallgeschwindigkeit bestimmt werden, wie sie sich für eine lineare Ausbreitung des Lotimpulses vom Auftreffpunkt am Gewässerboden zum Wandler ergeben würde. Ein derartiges Meßverfahren für die mittlere Schallgeschwindigkeit ist für aufeinanderfolgende Messungen von Bodenprofilen eines Gewässers sehr aufwendig, weil das Fahrzeug für den Einsatz der Schallgeschwindigkeitsmeßsonde seine Fahrt ggf. bis zum Stillstand verzögern muß.

Der Erfindung liegt daher die Aufgabe zugrunde, die Bestimmung von Tiefenwerten mit Fächerloten zu verbessern und die Genauigkeit der Gewässer-Bodenprofil-Vermessung zu erhöhen.

Die Aufgabe wird mit einem Verfahren zum Bestimmen von Tiefenwerten eines Gewässers mit einem Fächerlot der im Oberbegriff des Anspruchs 1 angegebenen Art durch die Merkmale im Kennzeichenteil des Anspruchs 1 gelöst.

Bei dem erfindungsgemäßen Verfahren werden je Lotfächer eine Folge von Schallaufzeiten gemessen und daraus die Tiefenwerte berechnet, die jedem Fächerstrahl zugeordnet werden. Diese Zuordnung könnte ebenso bezüglich der Ablage erfolgen, die den Abstand vom Lot des Fahrzeugs zum Auftreffpunkt des jeweiligen Fächerstrahls bestimmt. Wesentlich für die korrekte Bestimmung von Tiefenwert und Ablage ist dabei eine richtig ermittelte mittlere Schallgeschwindigkeit. Da einerseits anzunehmen ist, daß die mittlere Schallgeschwindigkeit von Empfangsrichtung zu Empfangsrichtung sich nicht oder nur unwesentlich ändert, und andererseits der Gewässerboden einen im großen und ganzen ebenen Verlauf hat, kann das Bodenprofil durch ein Ausgleichspolynom angenähert werden, das als veränderliche Variante die Empfangsrichtung enthält. Mit den Mitteln der linearen Regression wird dann diejenige Ausgleichsfunktion ermittelt, die das durch die gemessenen Tiefenwerte gewonnene Bodenprofil optimal annähert. Durch geeignete Wahl des Ausgleichspolynoms ergibt sich dabei ein Korrekturwert für die mittlere Schallgeschwindigkeit, so daß sie auf diese Weise ohne zusätzliche Messung verbessert werden kann. Mit der so korrigierten Schallgeschwindigkeit sind dann aus den gemessenen Laufzeiten Tiefenwerte mit erheblich größerer Genauigkeit bestimmbar.

Ein derartiges Meßverfahren ist schnell und sicher und vermeidet jegliche Form der Fahrtunterbrechung durch zusätzliche Sensormessungen. Es wäre sogar möglich, die Verbesserung und Korrektur der Tiefenmeßwerte am Ende einer Meßfahrt und somit eine nachträgliche Laborauswertung durchzuführen.

Weitere Vorteile des erfindungsgemäßen Verfahrens ergeben sich aus den Unteransprüchen.

Die Erfindung wird nunmehr anhand eines in der Zeichnung dargestellten Ausführungsbeispiels näher erläutert. Es zeigen:

Fig. 1      eine Darstellung der Meßgeometrie,

Fig. 2      eine Skizze der Modellfunktionen,

Fig. 3      ein Flußdiagramm,

Fig. 4      ein Blockschaltbild eines Fächerlots.

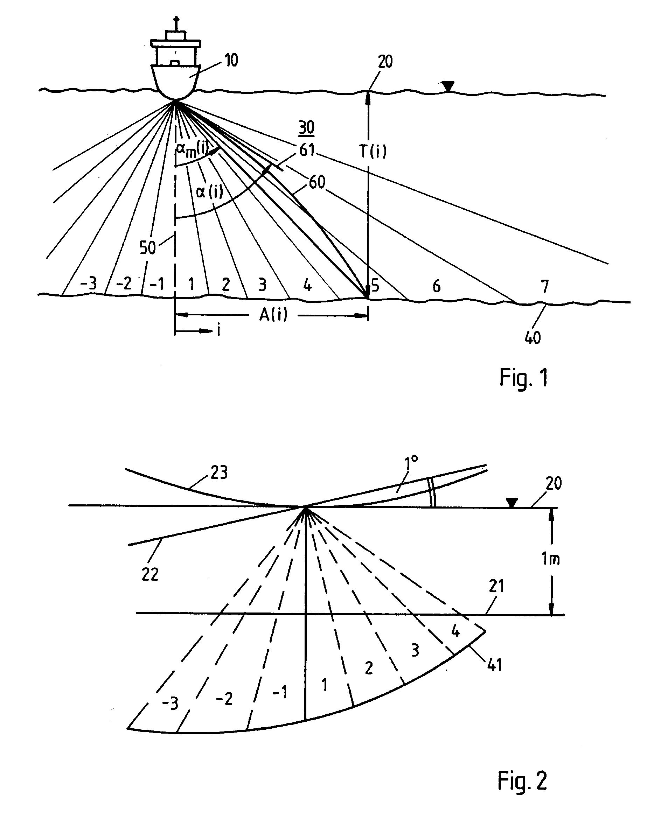

Zur Beschreibung der Meßgeometrie ist in Fig. 1 ein Vermessungsfahrzeug 10 auf der Wasseroberfläche 20 eines Gewässers 30 dargestellt. Die Tiefe oder Tiefenwerte $T_i$ des Gewässers 30 an den jeweiligen Meßpunkten sind durch das Bodenprofil 40 bestimmt. Das Vermessungsfahrzeug 10 ist mit einem Fächerlot ausgerüstet, dessen Fächer prinzipiell durch die teilweise dargestellten Sektoren gekennzeichnet ist. Die einzelnen Sektoren sind durch Zahlwerte für den Index i bezeichnet. Dabei sind von der senkrechten Lotlinie 50 nach rechts die Sektoren 1 bis 7 und links die Sektoren -1 bis -3 des Fächerlotes abgetragen. Die Sektoren i werden nachfolgend auch als Empfangsrichtungen i bezeichnet.

Vom Vermessungsfahrzeug 10 wird ein Sendeimpuls abgestrahlt, der im Bereich des Empfangssektors 5 am Gewässerboden gestreut bzw. reflektiert wird und auf dem Schallstrahl 60 den Empfangswandler des Vermessungsfahrzeugs 10 erreicht. Dabei weist die Tangente 61 an den Schallstrahl 60 den am Kiel gemessenen Winkel $\alpha(i)$ bezogen auf die Lotrichtung 50 auf. Der meß- oder einstellbare Winkel $\alpha(i)$ wird zum mittleren Empfangswinkel $\alpha_m(i)$ im Verhältnis der Schallgeschwindigkeiten am Kiel $c_k$ und der mittleren Schallgeschwindigkeit $c_m$ im Gewässer korrigiert und so der korrigierten Empfangsrichtung i, hier i=5, zugeordnet. Der Zusammenhang der Formelgrößen ist durch die Gl. 1

$$\frac{c_k}{c_m} = \frac{\sin \alpha(i)}{\sin \alpha_m(i)} \tag{1}$$

beschrieben. Unter einer Annahme für eine mittlere Schallgeschwindigkeit $c_{ma}$, z.B. $c_{ma}$ = 1500 m/sec, kann dann der mittlere Empfangswinkel $\alpha_m(i)$ für jeden Sektor des Fächerlots und somit für jede Empfangsrichtung i zu

$$\alpha_m(i) = \arcsin \left(\frac{c_{ma}}{c_k} \cdot \sin \alpha(i)\right) \tag{2}$$

bestimmt werden.

Unter Berücksichtigung der für jede Empfangsrichtung i gemessenen Laufzeit t(i) des Lotimpulses ergeben sich dann entsprechend zugeordnet die Tiefe T(i) und die Ablage A(i) zu

$$T(i) = c_{ma} \frac{t(i)}{2} \cos \alpha_m(i), \tag{3}$$

$$A(i) = c_{ma} \frac{t(i)}{2} \sin \alpha_m(i). \tag{4}$$

In Fig. 2 sind diejenigen Teilfunktionen dargestellt, aus denen sich die für die mehrfache lineare Regression erforderliche Modellfunktion zusammensetzt. Die Empfangsrichtung i des Fächers ist auch hier die unabhängige Variable der einzelnen Teilfunktionen. Die abhängigen Variablen der Teilfunktionen stellen Tiefenwerte bzw. Tiefendifferenzen dar.

Die erste Teilfunktion 21 verläuft in einem konstanten Abstand von der Wasseroberfläche 20 von beispielsweise 1 m und wird durch die Gleichung

$$x_1(i) = 1 \tag{5}$$

beschrieben. D.h. es werden für alle Richtungen Tiefenwerte von einem Meter definiert und gespeichert.

Die zweite Teilfunktion 22 weist eine konstante Steigung gegenüber der Wasseroberfläche von hier z.B. 1° auf. Ihre Werte ergeben sich zu

$$x_2(i) = A(i) \cdot tg \, 1°. \tag{6}$$

Die dritte Teilfunktion 23 hat einen gekrümmten Verlauf und berücksichtigt die für den Schallstrahlverlauf relevante mittlere Schallgeschwindigkeit. Durch die Teilfunktion 23 werden Tiefendifferenzen berücksichtigt, die gemäß Gleichung 7 zu berechnen sind

$$x_3(i) = T_n(i) - T(i), \tag{7}$$

EP 0 629 879 B1

$$\text{wobei } T_n(i) = (C_{ma}-1{,}0) \frac{t(i)}{2} \cdot \cos \alpha_n(i) \tag{8}$$

$$\text{und } \alpha_n(i) = \arcsin [(c_{ma}-1{,}0)/c_k \cdot \sin \alpha(i)]. \tag{9}$$

Das heißt aber, daß zur Bestimmung der Tiefendifferenz $x_3(i)$ die bisherige Tiefe $T(i)$ von einem neuen Tiefenwert $T_n(i)$ subtrahiert wird, der aufgrund einer gemäß Gl. 8 um 1m/s verminderten mittleren Schallgeschwindigkeit $c_{ma}$ neu berechnet wird. Der dabei zu berücksichtigende geänderte neue Empfangswinkel $\alpha_n(i)$ kann nach der Gl. 9 ermittelt werden, die bezüglich der mittleren Schallgeschwindigkeit $c_{ma}$ aus Gl. 2 entwickelt worden ist. Die Zusammensetzung dieser drei Teilfunktionen $x_1(i)$, $x_2(i)$ und $x_3(i)$ nach Bewertung mit ihnen zuzuordnenden Koeffizienten $K_1$, $K_2$, $K_3$ durch Addition führt zu dem durch die Kurve 41 dargestellten Bodenprofil, der Modellfunktion. Zusätzlich skizziert sind dabei für verschiedene Empfangsrichtungen i die Empfangssektoren 1 bis 4 und -1 bis -3.

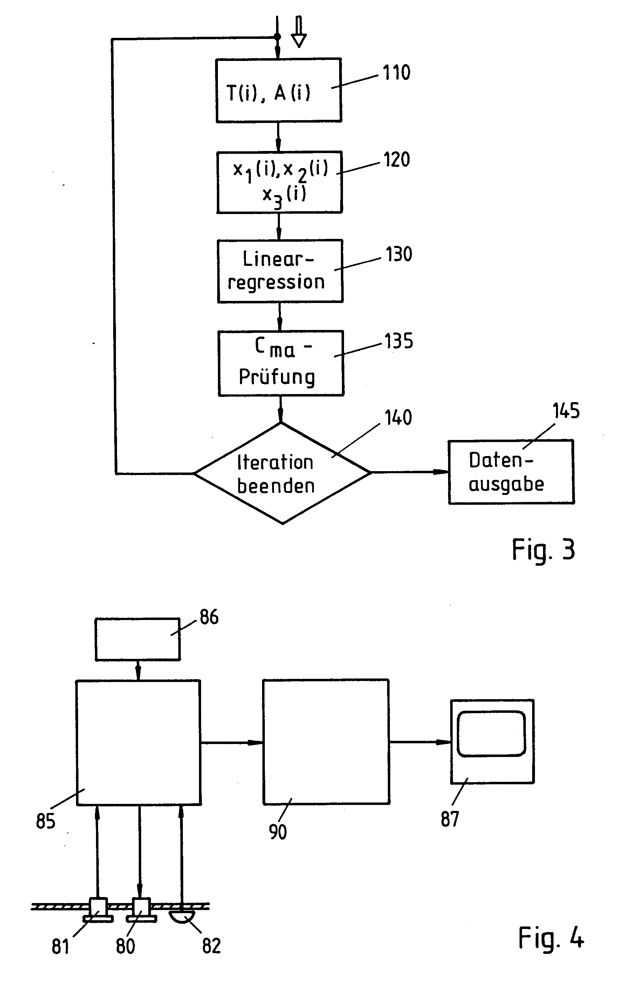

Anhand des Flußdiagramms in Fig. 3 wird der Ablauf des erfindungsgemäßen Verfahrens verdeutlicht.

Bezogen auf den abgestrahlten Sendeimpuls werden in jedem der 80 Empfangssektoren, die vom Gewässerboden reflektierten Lotimpulse empfangen. Dabei werden für jede Empfangsrichtung i die Laufzeiten $t(i)$ des Lotimpulses gemessen. Aus der Laufzeit $t(i)$ und der mittleren Schallgeschwindigkeit $c_{ma}$ läßt sich eine Entfernung zum Auftreffpunkt am Meeresboden berechnen und daraus über die geometrischen Beziehungen, wie anhand Fig. 1 dargestellt, die Tiefe $T(i)$ am Auftreffpunkt gemäß Gl. 3 und seine Ablage $A(i)$ von der Lotlinie gemäß Gl. 4 im Tiefen-Ablage-Rechner 110 bestimmen. Angepaßt an die Empfangsrichtungen werden dann im Modellrechner 120 für die vorgegebenen Teil- oder Modellfunktionen $x_1(i)$ bis $x_3(i)$ gemäß Gleichungen 5 bis 7 die Tiefenwerte des geschätzten Bodenprofilmodells für die Empfangsrichtungen i berechnet und in Speicherbereichen des Regressionsprozessors 130 für die Berechnung der Linearregression abgelegt.

Die gespeicherten Daten dieser Funktionen für alle Meßwerte bilden ein System von Gleichungen, dessen Parameter die Koeffizienten $K_1$, $K_2$, $K_3$ im Regressionsprozessor 130 so bestimmt werden, daß die gemessenen Tiefenwerte $T(i)$ eine optimale Näherung sind. Bei diesem bekannten Verfahren der mehrfachen Linearregression wird die durch die Summe der mit den Koeffizienten $K_1$, $K_2$, $K_3$ multiplizierten Teilfunktionen $x_1(i)$ bis $x_3(i)$ gewonnene Gleichung 10

$$\hat{T}(i) = K_1 \cdot x_1(i) + K_2 \cdot x_2(i) + K_3 \cdot x_3(i) \tag{10}$$

an die Anzahl M der Meßdaten angepaßt und die Koeffizienten $K_1$, $K_2$, $K_3$ so bestimmt, daß der Ausdruck gemäß Gleichung 11

$$\sum_{m=1}^{M} (T_m(i) - \hat{T}_m(i))^2 = \sum_{m=1}^{M} (T_m(i) - (K_1 \cdot x_{1m}(i) + K_2 \cdot x_{2m}(i) + K_3 \cdot x_{3m}(i)))^2 \tag{11}$$

minimal wird. D.h. die mit den Modellfunktionen bestimmten Tiefen sind dabei optimal insgesamt an den sog. Meßvektor, das sind die aus den Laufzeitmessungen $t(i)$ ermittelten Tiefenwerte $T(i)$, angepaßt. Zusätzlich zu den Tiefenwerten ist die Varianz und ggf. ein Korrelationsfaktor zu berechnen, die ein Maß für die Genauigkeit der Lösungen liefern. Ein solches Verfahren ist beispielsweise aus der Literatur Müller/Kick, Basic-Programme für die angewandte Statistik, 1985, R. Oldenbourg Verlag, S. 77 ff, bekannt.

Nach einer Plausibilitätsprüfung 135, bei der die Gültigkeit der Schallgeschwindigkeitsermittlung zeitlich aufeinanderfolgender Fächerlotungen geprüft wird und Extremdaten der Schallgeschwindigkeit $c_{ma}$ ausgeschlossen werden, wird dann aufgrund des Korrelationsfaktors oder der Varianz - wenn sie z.B. geringer als ein vorgegebener Wert sind - im Entscheidungsblock 140 entschieden, daß der Rechengang zu beenden und das Ergebnis der Ausgabeeinheit 145 zuzuführen oder in einem weiteren Iterationsschritt zu wiederholen ist. Dabei wird dann die in der Regression über den Anteil der Teilfunktion $x_3(i)$ ermittelte, geänderte Schallgeschwindigkeit $c_{ma}$ zur Berechnung eines verbesserten Meßdatenvektors herangezogen. Entscheidend für die Änderung der mittleren Schallgeschwindigkeit $c_{ma}$ ist der Koeffizient $K_3$, denn $K_3$ multipliziert mit der gemäß Gl. 8 durchgeführten Verminderung der Schallgeschwindigkeit, in diesem Beispiel 1 m/s, ergibt unmittelbar den Korrekturwert zur Bestimmung der korrigierten mittleren Schallgeschwindigkeit. Aus den gemessenen Laufzeiten $t(i)$ werden im Tiefen-Ablage-Rechner 110 mit der korrigierten mittleren Schallgeschwindigkeit $c_{ma}$ korrigierte Tiefen-$T(i)$ und Ablagewerte $A(i)$ bestimmt und der durch das Flußdiagramm gemäß Fig. 3 dargestellte Verarbeitungsprozeß iterativ erneut durchlaufen.

Bei mehrfacher Durchführung dieses Iterationsprozesses gemäß Fig. 3 lassen sich sehr hohe Genauigkeiten für die Korrektur der Messung erzielen. Entsprechende Simulationen haben jedoch gezeigt, daß bereits die zweimalige Iteration die in der Vermessungstechnik erforderliche hohe Genauigkeit liefert.

Das prinzipielle Blockschaltbild in Fig. 4 zeigt eine Fächerlotanlage in einem Vermessungsfahrzeug. Dabei ist ein Sendewandler 80, ein Empfangswandler 81 und ein Schallgeschwindigkeitssensor 82 zur Messung der Schallgeschwindigkeit $c_k$ am Kiel des Fahrzeugs mit einem Fächerlot 85 verbunden. Üblicherweise benötigt das Fächerlot 85 sämtliche Navigations- und Fahrzeugdaten, um eine Kartierung der Meßergebnisse zu ermöglichen. Diese Daten werden über die Navigationsschnittstelle 86 zugeführt. Mit dem Fächerlot 85 ist außerdem eine Datenausgabe in Form einer Anzeige 87 verbunden. Darüber hinaus ist eine Regressionsrecheneinheit 90 vorgesehen, in der die erfindungsgemäßen Korrekturen zur Bodenprofilermittlung bestimmt werden.

Der Sendewandler 80 weist eine Richtcharakteristik auf, die quer zur Fahrtrichtung des Fahrzeugs ungerichtet ist, um den ganzen Sektor zu beschallen, der von dem Empfangsfächer des Empfangswandlers 81 überdeckt wird. In Fahrzeuglängsrichtung ist der Sendewandler 80 stark gebündelt, um die Schallabstrahlung im Nutzbereich zu konzentrieren.

Als Empfangsfächer des Empfangswandlers 81 sind dabei alle Empfangsrichtungen, d.h. etwa 2°-schmale Empfangssektoren vorgegeben, die, wie in Fig. 1 prinzipiell dargestellt, den Bereich von der linken zur rechten Fahrzeugseite hin überdecken. Durch entsprechende Richtungsbildner ist die Selektion der schmalen Empfangssektoren i gewährleistet. Wie ebenfalls der Fig. 1 zu entnehmen ist, sind den Empfangssektoren i Auftreffpunkte am Gewässerboden mit unterschiedlichen Entfernungen zugeordnet. Daher ergeben sich für die gestreuten Lotimpulse je nach Empfangswinkel unterschiedliche Laufzeiten t(i), die vom Fächerlot 85 gemessen werden.

Ein weiterer Sensor 82 am Fahrzeugboden mißt die Schallgeschwindigkeit $c_k$ in unmittelbarer Nähe des Empfangswandlers 81, um den am Wandler 81 eingestellten Empfangswinkel $\alpha(i)$ zu bestimmen. Unter Berücksichtigung der geometrischen Beziehungen und der mittleren Schallgeschwindigkeit $c_{ma}$ sind dann die Tiefenwerte T(i) am jeweiligen Auftreffpunkt ermittelbar und wären als gemessenes Bodenprofil ebenfalls auf der Anzeige 87 darstellbar.

Diese Tiefenwerte T(i) werden auf den Regressionsrechner 90 übertragen. Der Regressionsrechner 90 bestimmt zunächst die drei Teilfunktionen $x_1(i)$ bis $x_3(i)$ gemäß Fig. 2 für das Bodenprofilmodell und dann diejenigen Koeffizienten $K_1$, $K_2$, $K_3$, mit denen das Modell an die "gemessenen" Tiefenwerte T(i) angepaßt wird.

Mit jeder weiteren Fächerauswertung wird ein neuer Bodenprofilschnitt aufgenommen, so daß sich eine Vielzahl von Werten für die mittlere Schallgeschwindigkeit ergibt. Da diese Werte jedoch nicht sprunghaft voneinander abweichen können, werden sie zur Plausibilitätsprüfung 145 gemäß Fig. 3 der Messung herangezogen und bei signifikanten Meßwertabweichungen ausgeschlossen oder durch die aus anderen Meßwertreihen bestimmte mittleren Schallgeschwindigkeiten verbessert bzw. ersetzt.

**Patentansprüche**

1. Verfahren zum Bestimmen von Tiefenwerten eines Gewässers mit einem Fächerlot, das aufgrund jedes ausgelösten Sendeimpulses für eine Vielzahl vorgegebener Empfangsrichtungen vom Gewässerboden gestreute bzw. reflektierte Lotimpulse empfängt, deren Laufzeit mißt und aus Laufzeit, Empfangsrichtung und mittlerer Schallgeschwindigkeit den jeweiligen Tiefenwert ermittelt, dadurch gekennzeichnet, daß die den jeweiligen Empfangsrichtungen i oder Ablagen A(i) zugeordneten Tiefenwerte T(i) als Eingangsdaten einem Regressionsrechner (90) zugeführt werden, daß durch die bekannte Methode der mehrfachen Linearregression Koeffizienten $K_1$, $K_2$, $K_3$ einer Ausgleichsfunktion berechnet werden, die eine Modellfunktion des Gewässerbodenprofils (40) darstellt und die die Tiefenwerte T(i) mit minimalem Fehler annähert, daß mindestens einer der berechneten Koeffizienten $K_3$ ein Bewertungsfaktor für eine von der mittleren Schallgeschwindigkeit $c_{ma}$ abhängige Teilfunktion $x_3(i)$ der Ausgleichsfunktion ist und daß aus der bewerteten Teilfunktion $x_3(i)$ eine korrigierte mittlere Schallgeschwindigkeit zur korrigierten Tiefenwertermittlung bestimmt wird.

2. Verfahren nach Anspruch 1, dadurch gekennzeichnet, daß für mindestens eine weitere Iteration die korrigierten Tiefenwerte als verbesserte Eingangsdaten dem Regressionsrechner (90) zugeführt werden.

3. Verfahren nach Anspruch 1 oder 2, dadurch gekennzeichnet, daß die Ausgleichsfunktion durch ein Polynom von mit den Koeffizienten $K_1$, $K_2$, $K_3$ bewerteten Teilfunktionen $x_1$, $x_2$, $x_3$ gebildet wird, daß eine erste Teilfunktion $x_1(i)$ derart bestimmt wird, daß sie eine konstante Tiefe für alle Empfangsrichtungen oder Ablagen A(i) aufweist, daß eine zweite Teilfunktion $x_2(i)$ derart bestimmt wird, daß das dadurch modellierte Bodenprofil eine konstante Steigung aufweist, und daß eine dritte Teilfunktion $x_3(i)$ derart bestimmt wird, daß sie für jede Empfangsrichtung i oder Ablage A(i) Differenztiefen des modellierten Bodenprofils zu den ermittelten Tiefenwerten T(i) aufgrund einer konstanten Änderung der mittleren Schallgeschwindigkeit $c_{ma}$ entspricht.

4. Verfahren nach einem der Ansprüche 1 bis 3, dadurch gekennzeichnet, daß die konstante Tiefe der ersten Teilfunktion 1 m, die konstante Steigung des modellierten Bodenprofils der zweiten Teilfunktion 1° und die Schallgeschwindigkeitsänderung der dritten Teilfunktion 1 m/s betragen.

5. Verfahren nach einem der Ansprüche 1 bis 4, dadurch gekennzeichnet, daß die Varianz und/oder der Korrelationsfaktor der korrigierten Tiefenwerte bestimmt werden und daß die iterative Berechnung der korrigierten Tiefenwerte mit der korrigierten Schallgeschwindigkeit beendet wird, wenn die Varianz und/oder der Korrelationsfaktor kleiner als ein vorgebbarer Schwellenwert sind.

**Claims**

1. Method of determining depth values of a stretch of water with a fan sounder which on the basis of each emitted transmission pulse for a plurality of predetermined reception directions receives sounding pulses scattered or reflected by the bottom of the stretch of water, measures the travel time of these sounding pulses and from the travel time, reception time and mean speed of sound determines the respective depth value, characterised in that the depth values $T(i)$ associated with the respective reception directions i or deviations $A(i)$ are delivered to a regression computer (90) as input data, that the known method of multiple linear regression is used to calculate coefficients $K_1$, $K_2$, $K_3$ of an equalising function which represents a model function of the profile of the bottom of the stretch of water and which approximates the depth values $T(i)$ with minimum error, that at least one of the calculated coefficients $K_3$ is an evaluation factor for a part-function $x_3(i)$ of the equalising function, which part-function is dependent upon the mean speed of sound, and that a corrected mean speed of sound is determined for the evaluated part-function $x_3(i)$ for corrected determination of the depth values.

2. Method as claimed in Claim 1, characterised in that for at least one further iteration the corrected depth values are delivered to the regression computer (90) as input data.

3. Method as claimed in Claim 1 or 2, characterised in that the equalising function is formed by a polynomial of part-functions $x_1$, $x_2$, $x_3$ evaluated with the coefficients $K_1$, $K_2$, $K_3$, that a first part-function $x_1(i)$ is determined in such a way that it has a constant depth for all reception directions or deviations $A(i)$, that a second part-function $x_2(i)$ is determined in such a way that the bottom profile modelled thereby has a constant gradient, and that a third part-function $x_3(i)$ is determined in such a way that for each reception direction i or deviation $A(i)$ it corresponds to differential depths of the modelled bottom profile relative to the determined depth values $T(i)$ on the basis of a constant alteration of the mean sound of speed $c_{ma}$.

4. Method as claimed in one of Claims 1 to 3, characterised in that the constant depth of the first part-function is 1 m, the constant gradient of the modelled bottom profile of the second part-function is 1° and the alteration in the speed of sound of the third part-function is 1 m/s.

5. Method as claimed in one of Claims 1 to 4, characterised in that the variance and/or the correlation factor of the corrected depth values are determined and that the iterative calculation of the corrected depth values with the corrected speed of sound is ended when the variance and/or the correlation factor are smaller than a predeterminable threshold value.

**Revendications**

1. Procédé pour déterminer des valeurs de profondeur d'une étendue d'eau à l'aide d'un sondeur en éventail qui, sur la base de chaque impulsion d'émission déclenchée, reçoit dans une multiplicité de directions de réception prédéterminées, des impulsions de détection dispersées et réfléchies par le fond de l'étendue d'eau, mesure leur temps de propagation et détermine la valeur de profondeur respective à partir du temps de propagation, de la direction de réception et de la vitesse moyenne du son, caractérisé en ce que les valeurs de profondeur $T(i)$, associées aux directions respectives de réception i ou aux décalages $A(i)$, sont envoyées en tant que données d'entrée à un calculateur de régression (90), que grâce au procédé connu de la régression linéaire multiple, des coefficients $K_1$, $K_2$ et $K_3$ d'une fonction de compensation sont calculés, fonction qui représente une fonction modèle du profil (40) du fond de l'étendue d'eau et approxime les valeurs de profondeur $T(i)$ avec une erreur minimale, qu'au moins l'un des coefficients calculés $K_3$ est un facteur de pondération pour une fonction partielle $x_3(i)$, qui dépend de la vitesse moyenne du son $c_{ma}$, de la fonction de compensation et qu'à partir de la fonction partielle pondérée $x_3(i)$ est déterminée une vitesse du son moyenne corrigée permettant la détermination corrigée de la valeur de profondeur.

2. Procédé selon la revendication 1, caractérisé en ce que les valeurs de profondeur corrigées sont envoyées en tant que données d'entrée améliorées au calculateur de régression (90).

3. Procédé selon la revendication 1 ou 2, caractérisé en ce que la fonction de compensation est formée par un polynôme de fonctions partielles $x_1$, $x_2$, $x_3$ pondérées par les coefficients $K_1$, $K_2$, $K_3$, qu'une première fonction partielle $x_1(i)$ est déterminée de telle sorte qu'elle possède une profondeur constante pour toutes les directions de réception ou tous les décalages A(i), qu'une seconde fonction partielle $x_2(i)$ est déterminée de telle sorte que le profil de base modélisé de ce fait possède une pente constante et qu'une troisième fonction partielle $x_3(i)$ est déterminée de telle sorte qu'elle correspond, pour chaque direction de réception i ou chaque décalage A(i), à des différences du profil de base modélisé par rapport aux valeurs déterminées de profondeur T(i) sur la base d'une modification constante de la vitesse moyenne du son $c_{ma}$.

4. Procédé selon l'une des revendications 1 à 3, caractérisé en ce que la profondeur constante correspond à la première fonction partielle 1 m, que la pente constante du profil de base modélisé correspond à la fonction partielle 1° et que la variation de la vitesse du son correspond à la troisième fonction partielle 1 m/s.

5. Procédé selon l'une des revendications 1 à 4, caractérisé en ce que la variance et/ou le facteur de corrélation des valeurs de profondeur corrigées sont déterminés et que le calcul itératif des valeurs de profondeur corrigées est terminé avec la vitesse du son corrigée, lorsque la variance et/ou le facteur de corrélation sont inférieurs à une valeur de seuil pouvant être prédéterminée.

Fig. 1

Fig. 2

8

Fig. 3

Fig. 4